Europäisches Patentamt

European Patent Office

Office européen des brevets

(11) Publication number: **0 307 119 B1**

## EUROPEAN PATENT SPECIFICATION

(45) Date of publication of patent specification: **21.10.92**  (51) Int. Cl.5: **F16B 25/00**

(21) Application number: **88307940.2**

(22) Date of filing: **26.08.88**

(54) Screw threaded fastener.

(30) Priority: **08.09.87 GB 8721048**

(43) Date of publication of application:
**15.03.89 Bulletin 89/11**

(45) Publication of the grant of the patent:
**21.10.92 Bulletin 92/43**

(84) Designated Contracting States:
**BE DE FR GB NL SE**

(56) References cited:
**EP-A- 0 136 912**
**FR-A- 2 095 754**
**FR-A- 2 564 916**
**US-A- 2 292 557**
**US-A- 4 621 963**

(73) Proprietor: **ITW LIMITED**
**ST. Marks House St. Marks Road**
**Windsor Berkshire SL4 3BD(GB)**

(72) Inventor: **Hewison, George David Burnthwaite**
**6 Thornbers Way Charvil**
**Twyford Berkshire RG10 9DW(GB)**

(74) Representative: **Rackham, Stephen Neil et al**
**GILL JENNINGS & EVERY 53-64 Chancery**
**Lane**
**London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

Our earlier patent specification GB-A-1270545 describes and claims a screw threaded fastener which is particularly arranged for fixing a corrugated metal roofing sheet onto underlying metal purlins. The fastener includes a self-drilling point, a first self-tapping screw thread adjacent the drilling point, an unthreaded region, a head and a second screw threaded portion adjacent the head. In use, the drilling point firstly drills a hole in the corrugated sheet material and the first screw threaded portion forms a thread through the sheet metal portion. Then, with the sheet adjacent the unthreaded portion the drilling point drills a hole through the underlying purlin. Once this has been completed the first screw threaded portion cuts a thread in the underlying purlin and, as the fastener is screwed into the purlin the second screw thread picks up the roofing sheet and urges it upwards to clamp it between the second screw threaded portion and the head of the fastener and of course any waterproof sealing washer interposed between the top of the roofing sheet and the head of the fastener. Such fasteners have been successful and used widely.

Our earlier patent specification GB-A-1277044 describes an improvement of the fastener described in specification GB-A-1270545 by making the fastener by a process including two forward extrusion steps using three different punch tools so that the diameter of the fastener adjacent the head is greater than the diameter adjacent the drill point. This enables the second screw threaded portion to have a larger diameter so that the crest diameter of the second screw thread is much greater than that of the first. This provides a more certain pick up of the roofing sheet onto the second screw threaded portion and so forms a more reliable seal between the head of the fastener and the roofing sheet. To provide clearance for the larger diameter portion of the fastener the process also includes a subsequent forging step in which wings are formed on the shank of the fastener above the first screw thread. The wings firstly ream out the screw thread formed in the roofing sheet by the first screw threaded portion and provide an enlarged hole which allows clearance for the larger diameter portion of the fastener, and secondly, when and if they come into contact with the upper face of the purlin, they prevent overdriving of the fastener.

Forming the blanks of the screw thread to form the portions of larger diameter and also the subsequent forging operation to produce the upstanding wings leads to the production process of these fasteners being expensive with the result that whilst they are technically superior they are more expensive to manufacture which makes it more difficult for them to compete in the market place with fasteners made in accordance with patent specification 1270545.

The US specification 4621963 describes a screw threaded fastener for securing two parts in spaced relation such as a sheet metal roof panel to a roof frame. In use, the first screw thread is arranged to pass through the top sheet and engage the roof frame, drawing the flared portion through the hole to enlarge the latter and roll over the metal around the edge of the hole. Tapping takes place before the flared portion touches the top sheet.

According to a first aspect of this invention a screw threaded fastener for use in fastening corrugated sheet material to metal purlins comprises a drilling point, a head, a first self-tapping screw threaded portion adjacent the drilling point, a second screw threaded portion adjacent the head, the second screw threaded portion having a larger crest diameter than the first screw threaded portion, and an unthreaded portion extending between the first and second screw threaded portions, the diameter of the part of the fastener carrying the second screw threaded portion being larger than that carrying the first screw threaded portion and the fastener also including a transition portion between its portions of smaller and larger diameter, the transition portion being frusto-conical in shape and including forming means which project outwards from the axis of the fastener no further than the diameter of the larger diameter portion, the forming means being formed by a projection which projects outwards from the frusto-conical surface, characterised in that the forming means has the form of a chordal segment cut from a diametral slice through a hemisphere, and the transition portion including the forming means is arranged substantially adjacent the first screw threaded portion so that, in use, the first screw threaded portion passes through the corrugated sheet material and the forming means enlarges the diameter of the hole through the corrugated sheet material before the first screw threaded portion engages the metal purlin.

According to a second aspect of this invention a method of forming a screw threaded fastener according to the first aspect of the invention for use in attaching a corrugated roofing sheet to an underlying metal purlin comprises the steps of forward extruding part of a fastener blank through a die, thereby reducing the diameter of the blank and simultaneously producing forming means on the transition portion between the smaller and larger diameter portions of the blank, forming the blank to produce a drill point at the free end of the smaller diameter portion of the blank and a head at the free end of the larger diameter portion of the blank, and thread rolling the blank thereby forming a first screw thread on the smaller diameter portion of the blank adjacent the drilling point and a second screw thread having a larger crest diameter than the first screw thread on the larger diameter portion of the blank adjacent the head.

Preferably more than one such projection is formed around the transition zone and the projections are arranged equi-angularly around the transition zone.

There can be a reduction in cross-sectional area as high as 70% between the smaller and larger diameter portions of the fastener if two dies are used and this can accordingly give rise to a corresponding increase in crest diameter of the second screw thread. However, more usually, a reduction of cross-sectional area of around 30% is provided between the larger and smaller diameter portions of the fastener and this can be achieved in a single die by a single cold forward extrusion process. It is preferred that the unthreaded portion is of the larger diameter and, in this case, the transition zone is formed at the intersection between the first screw threaded portion and the unthreaded portion.

A particular example of a fastener in accordance with this invention will now be described with reference to the accompanying drawings, in which:-

Figure 1 is a side elevation of the fastener;
Figure 2 is an end elevation showing the head of the fastener;
Figure 3 is a side elevation drawn to a larger scale of the transition portion; and,
Figure 4 is a perspective view of the transition portion.

The fastener comprises a drilling tip 1 formed at one end and a head 2 at the other end, a first self-tapping screw thread 3 formed adjacent the drilling point 1 and a second screw thread 4 formed adjacent the head. An unthreaded portion 5 extends between the screw threads 3 and 4 and a transition portion 6 is located between the end of the screw thread 3 and the unthreaded portion 5. The head 2, the second screw thread 4 and the unthreaded portion 5 are all formed from a portion of a screw blank having a larger diameter of, in this example 5.1 mm whilst the thread 3 and drilling point 1 is formed from a screw blank of diameter 4.55 mm.

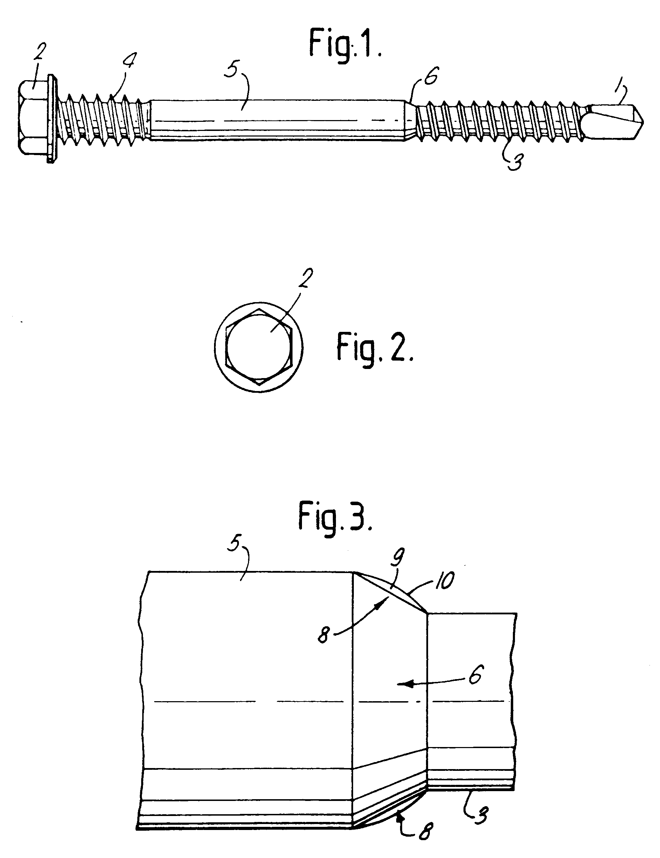

The transition portion 6 comprises a frusto-conical portion 7 extending between the larger and smaller diameter portions of the fastener and two forming portions 8. The forming portions 8 include shoulders 9 and rounded faces 10. The forming portions 8 include rounded outer faces 10 and correspond to chordal segments of a diametral slice through a hemisphere so that they are rounded both in a plane containing both segments and the axis of the fastener, as shown in Figure 3 and rounded in the circumferential sense.

On use such a fastener is intended to be used for attaching a corrugated sheet metal covering to an underlying metal purlin. The drilling point 1 first drills a hole through the corrugated sheet and then the first screw thread 3 cuts a thread around the aperture. Further forward movement and rotation urges the forming means 8 against the aperture. These configurations of the forming means 8 rolls the corrugated sheet material downwards as the transition portion 6 moves through the hole. This firstly enlarges the hole to allow the larger diameter unthreaded portion 5 of the fastener to penetrate the corrugated sheet and secondly provides an apparent thickening of the sheet material to ensure better engagement of the second screw thread 4 with the sheet material. Further rotation and forward movement of the fastener causes the drilling point 1, to drill through the purlin and then the screw thread 3 cuts a screw thread as it is screwed into the purlin at the same time as the thread 4 picks up on the thickened region of the corrugated sheet.

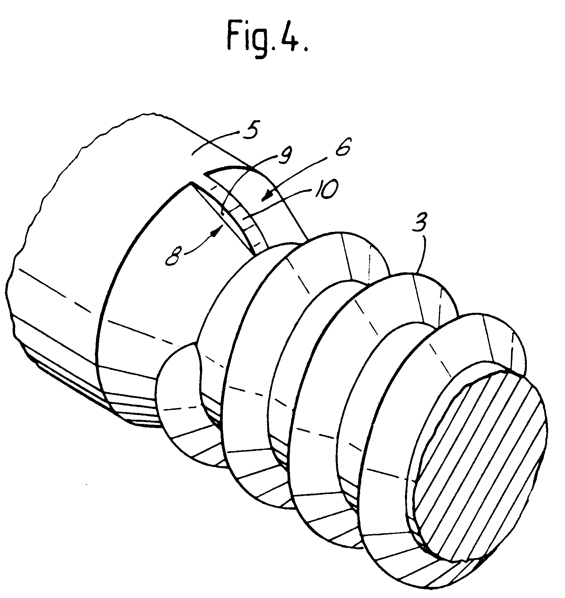

The fastener is made by taking a blank of diameter 5.1 mm and subjecting this to a forward extrusion step to form the smaller diameter portion to carry the screw thread 3 and the drilling point 1. The blank is driven through a generally conical die having an input diameter of 5.1 mm and an exit diameter of 4.55 mm by a punch. The die includes a pair of diametrically opposed recesses having rounded bases formed by the cap of a sphere of diameter substantially 5.1 mm. Thus the die has a shape which is the inverse of the shape of the transition region 6 shown in Figure 4. Forward extrusion continues until the smaller diameter portion reaches an end stop. Further forward movement of the punch causes a further thickening of the larger diameter portion of the blank and partly forms the head 2. A second punch then completes the thickening of the larger diameter portion and the head 2 whilst the blank is still contained in the same die. The drilling point 1 is then formed at the free end of the smaller diameter portion of the blank and screw threads 3 and 4 are rolled onto the blank. The blank is subsequently case hardened to complete the fastener. Preferably the second screw thread 4 has an included flank angle of 30° to increase still further its crest diameter.

**Claims**

1. A screw threaded fastener for use in fastening corrugated sheet material to metal purlins comprising a drilling point (1), a head (2), a first self-tapping screw threaded portion (3) adjacent the drilling point (1), a second screw threaded portion (4) adjacent the head (2), the second screw threaded portion (4) having a larger crest diameter than the first screw threaded portion (3), and an unthreaded portion (5) extending between the first and second screw threaded portions, the diameter of the part of the fastener carrying the second screw threaded portion being larger than that carrying the first screw threaded portion (3) and the fastener also including a transition portion (6) between its portions of smaller and larger diameter, the transition portion being frusto-conical in shape and including forming means (8) which project outwards from the axis of the fastener no further than the diameter of the larger diameter portion, the forming means (8) being formed by a projection (9) which projects outwards from the frusto-conical surface (7), characterised in that the forming means has the form of a chordal segment cut from a diametral slice through a hemisphere, and the transition portion (6) including the forming means (8) is arranged substantially adjacent the first screw threaded portion (3) so that, in use, the first screw threaded portion (3) passes through the corrugated sheet material and the forming means (8) enlarges the diameter of the hole through the corrugated sheet material before the first screw threaded portion (3) engages the metal purlin.

2. A screw threaded fastener according to claim 1, in which two projections (9) are formed opposite each other around the transition portion (6).

3. A screw threaded fastener according to claim 2, in which more than two such projections (9) are formed around the transition portion (6) and in which the projecting (9) segments are arranged equi-angularly around the transition portion (6).

4. A method of manufacturing a screw threaded fastener according to any one of the preceding claims for use in attaching a corrugated roofing sheet to an underlying metal purlin comprising the steps of forward extruding part of a fastener blank through a die, thereby reducing the diameter of the blank and simultaneously producing forming means (8) on the transition portion (6) between the smaller and larger diameter portions of the blank, forming the blank to produce a drill point (1) at the free end of the smaller diameter portion of the blank and a head (2) at the free end of the larger diameter portion of the blank, and thread rolling the blank thereby forming a first screw thread (3) on the smaller diameter portion of the blank adjacent the drilling point (1) and a second screw thread (4) having a larger crest diameter than the first screw thread (13) on the larger diameter portion of the blank adjacent the head (2).

5. A method according to claim 4, in which a reduction of cross-sectional area of around 30% is provided between the larger and smaller diameter portions of the fastener and this is achieved in a single die by a single cold forward extrusion process.

**Patentansprüche**

1. Befestigungsmittel mit Schraubgewinde zur Verwendung bei der Befestigung von Wellblechmaterial an Metallpfetten, das eine Bohrspitze (1), einen Kopf (2), einen ersten selbstschneidenden Schraubgewindeabschnitt (3), der an die Bohrspitze (1) angrenzt, aufweist, einen zweiten selbstschneidenden Schraubgewindeabschnitt (4), der an den Kopf (2) arigrenzt, wobei der zweite selbstschneidende Schraubgewindeabschnitt (4) einen größeren Spitzendurchmesser als der erste selbstschneidende Schraubgewindeabschnitt (3) hat, und einen gewindefrei Abschnitt (5), der sich zwischen dem ersten und dem zweiten Gewindeabschnitt erstreckt, wobei der Durchmesser des Befestigungsteils, das den zweiten Schraubgewindeabschnitt trägt, größer als der, der den ersten Schraubgewindeabschnitt (3) trägt, ist, und das Befestigungsmittel außerdem einen Übergangsabschnitt (6) zwischen seinen Abschnitten mit kleinerem und größerem Durchmesser einschließt, wobei der Übergangsabschnitt kegelstumpfförmig ist und ein Verformungsmittel (8) einschließt, das von der Achse des Befestigungsmittels nicht weiter als der Durchmesser des Abschnitts mit dem größeren Durchmesser nach außen ragt, wobei das Verformungsmittel (8) durch einen Fortsatz (9) gebildet wird, der aus der kegelförmigen Oberfläche herausragt, dadurch gekennzeichnet, daß das Verformungsmittel die Form eines Sehnenabschnitts, der aus einem diametricalen Abschnitt durch eine Halbkugel geschnitten wurde, aufweist und der Übergangsabschnitt (6) einschließlich des Verformungsmittels (8) im wesentlichen an den ersten Schraubgewindeanschnitt (3) angrenzend angeordnet ist, so daß im Gebrauch der erste Schraubgewindeabschnitt (3) das Wellblechmaterial passiert und das Verformungsmittel (8) den Durchmesser des Loches in dem Wellblechmaterial vergrößert, bevor der erste Schraubgewindeabschnitt (3) in die Metallpfette eingreift.

**2.** Befestigungsmittel mit Schraubgewinde nach Anspruch 1, dadurch gekennzeichnet, daß zwei sich gegenüberliegende Fortsätze (9) um den Übergangsabschnitt (6) geformt sind.

**3.** Befestigungsteil mit Schraubgewinde nach Anspruch 2, dadurch gekennzeichnet, daß mehr als zwei Fortsätze (9) um den Übergangsabschnitt (6) geformt sind und die vorstehenden Segmente (9) gleichwinklig um den übergangsabschnitt (6) angeordnet sind.

**4.** Verfahren zur Herstellung eines Befestigungsmittels mit Schraubgewinde nach einem der vorangehenden Ansprüche zur Verwendung bei der Befestigung eines Wellblechdaches an einer darunterliegenden Metallpfette, gekennzeichnet durch die Stufen einer vorwärtsgerichteten Extrusion eines Teils das Befestigungsmittelrohlings durch eine Düse, wobei der Durchmesser des Rohlings verringert wird und gleichzeitig Verformungsmittel (8) auf dem Übergangsabschnitt (6) zwischen den Abschnitten mit dem kleineren und dem größeren Durchmesser hergestellt werden, der Rohling unter Herstellung einer Bohrspitze (1) an dem freien Ende des Abschnitts des Rohlings mit dem kleineren Durchmesser und eines Kopfes (2) an dem freien Ende des Abschnitts des Rohlings mit dem größeren Durchmesser geformt wird, und durch Gewindewalzen auf dem Rohling ein erster Schraubgewindeabschnitt (3) auf dem an die Bohrspitze (1) angrenzenden Abschnitt des Rohlings mit dem kleineren Durchmesser hergestellt wird, und ein zweiter Schraubgewindeabschnitt (4), der einen größeren Spitzendurchmesser als der erste Schraubgewindeabschnitt (3) besitzt, auf dem an den Kopf (2) grenzenden Abschnitt des Rohlings mit dem größeren Durchmesser hergestellt wird.

**5.** Verfahren nach Anspruch 4, gekennzeichnet durch eine Verringerung der Querschnittsfläche zwischen den Abschnitten mit dem kleineren und dem größeren Durchmesser des Befestigungsmittels um etwa 30 %, wobei dies in einer einzigen Düse durch ein einziges vorwärtsgerichtetes Kaltextrusionsverfahren erreicht wird.

**Revendications**

**1.** Elément de fixation fileté pour la fixation de tôle ondulée à des pannes métalliques, comprenant une pointe perceuse (1), une tête (2), une première partie filetée autotaraudeuse (3) contiguë à la pointe perceuse (1), une seconde partie filetée (4) contiguë à la tête (2), cette seconde partie filetée (4) ayant un plus grand diamètre extérieur que la première partie filetée (3), et une partie non filetée (5) s'étendant entre les première et seconde parties filetées, le diamètre de la partie de l'élément de fixation portant la seconde partie filetée étant supérieur à celui de la partie portant la première partie filetée (3), et l'élément de fixation comportant aussi une partie de transition (6) entre ses parties de plus petit et de plus grand diamètre, cette partie de transition étant tronconique et comportant des moyens de formage (8) qui saillent vers l'extérieur de l'axe de l'élément de fixation de pas plus du diamètre de la partie de plus grand diamètre, ces moyens de formage (8) étant formés par une saillie (9) qui saille vers l'extérieur de la surface tronconique (7), caractérisé par le fait que le moyen de formage (8) a la forme d'un segment cordal taillé dans une tranche diamétrale d'un hémisphère, et la partie de transition (6) comportant les moyens de formage (8) est placée sensiblement contre la première partie filetée (3) afin que, lors de l'utilisation, la première partie filetée (3) traverse la tôle ondulée et le moyen de formage (8) augmente le diamètre du trou traversant la tôle ondulée avant que la première partie filetée (3) vienne en prise avec la panne métallique.

**2.** Elément de fixation fileté selon la revendication 1, sur lequel deux saillies (9) sont formées à l'opposé l'une de l'autre autour de la partie de transition (6).

**3.** Elément de fixation fileté selon la revendication 2, sur lequel plus de deux telles saillies (9) sont formées autour de la partie de transition (6) et sur lequel les segments saillants (9) sont disposés angulairement équidistants autour de la partie de transition (6).

**4.** Procédé de fabrication d'un élément de fixation fileté selon l'une des revendications précédentes pour la fixation d'une tôle ondulée de couverture à une panne métallique située dessous, comprenant le filage direct dans une filière d'une partie d'une ébauche d'élément de fixation pour la réduction du diamètre de cette ébauche et en même temps la production de moyens de formage (8) sur la partie de transition (6) entre les parties de plus petit et de plus grand diamètre de l'ébauche, le façonnage de l'ébauche pour la production d'une pointe perceuse (1) à l'extrémité libre de la partie de plus petit diamètre de l'ébauche et d'une tête (2) à l'extrémité libre de la partie de plus grand diamètre de l'ébauche, et le laminage de l'ébauche pour la formation d'un premier filetage (3) sur la partie de plus petit diamètre de l'ébauche? contre la pointe perceuse (1) et d'un second filetage (4) ayant un plus grand diamètre extérieur que le premier (3) sur la partie de plus grand diamètre de l'ébauche contre la tête (2).

5.  Procédé selon la revendication 4, dans lequel une réduction de section d'environ 30 % est prévue entre les parties de plus grand et de plus petit diamètre de l'élément de fixation et est réalisée dans une filière unique par une opération unique de filage direct à froid.

Fig.1.

Fig. 2.

Fig.3.

Fig.4.